Europäisches Patentamt

(19) European Patent Office

Office européen des brevets

(11) Publication number: **0 018 119**
**B1**

(12) **EUROPEAN PATENT SPECIFICATION**

(45) Date of publication of patent specification: **24.10.84**

(51) Int. Cl.³: **A 01 N 25/26**

(21) Application number: **80301001.6**

(22) Date of filing: **31.03.80**

(54) **Encapsulated pesticidal composition and a method for making it.**

(30) Priority: **29.03.79 US 25213**

(43) Date of publication of application:
**29.10.80 Bulletin 80/22**

(45) Publication of the grant of the patent:
**24.10.84 Bulletin 84/43**

(84) Designated Contracting States:
**CH FR IT NL SE**

(56) References cited:
**CH-A- 430 660**
**US-A-3 372 019**

(73) Proprietor: **UNIROYAL, INC.**
**1230 Avenue of the Americas Rockefeller Center New York, New York 10020 (US)**

(72) Inventor: **Reynolds, James Adelbert**
**116 Hickory Lane**
**Naugatuck New Haven Connecticut 06770 (US)**

(74) Representative: **Harrison, Michael Robert et al URQUHART-DYKES & LORD 11th Floor Tower House Merrion Way**
**Leeds LS2 8PB West Yorkshire (GB)**

Courier Press, Leamington Spa, England.

# O 018 119

## Description

This invention relates to a method of encapsulating a pesticide for the purpose of reducing the phytotoxicity to plants while essentially maintaining pesticidal activity. The invention also relates to an encapsulated pesticidal composition useful in such method, produced by drying a mixture of pesticide on a particulate carrier suspended in a polymer latex.

Various methods for encapsulating are known. The following references disclose conventional methods:

U.S.P. 2,800,457, Green et al., July 23, 1957, teaches a method of making oil-containing capsules by emulsifying oil in an aqueous sol using two hydrophilic colloidal materials having opposite electric charges, cooling the mixture and recovering the gelled product.

U.S.P. 2,800,458, Green, July 23, 1967, discloses a salt-coacervation method for encapsulating oil using gellable hydrophilic colloidal material.

U.S.P. 3,015,128, Somerville, January 2, 1962, deals with a centrifugal encapsulating apparatus for covering filler material such as kerosene with a medium such as a mixture of polyvinyl alcohol and sodium alginate in a water/glycerol solvent.

U.S.P. 3,016,308, Macaulay, January 9, 1962, teaches rupturable capsules containing a liquid using either a non-ionizable water-soluble or an hydrophobic water-insoluble film former.

U.S.P. 3,423,489, Arens et al., January 21, 1969, deals with an encapsulating process for liquid materials using two separate streams, one for the encapsulating material and the other for the liquid filler.

U.S.P. 3,429,827, Ruus, February 25, 1969, discloses a process for encapsulating substances such as liquids or dispersions in a shell based on condensation polymers using two separate polymer reactants, such polymer being formed at the interface of the substance within the reaction medium.

Many chemicals useful for the control of pests such as insects, acarids, fungi, etc. may cause phytotoxicity to the leaves of plants or trees sensitive to such chemicals when applied at pesticidally effective concentrations. The results are loss of green leaf surface or partial defoliation of the plant as well as reduction of yield and possible loss of plants. It is important to maintain pesticidal activity of such chemicals while reducing the phytotoxicity of the active material to the plants.

It has been found that the phytotoxic effects of such chemicals can be greatly reduced or completely eliminated when the pesticide is applied to a particulate carrier material and the resulting carrier-pesticide combination is subsequently encapsulated with a polymer material. Concentrations of pesticide on carrier materials may typically be from 5 to 80 percent, preferably 20 to 65 percent by weight, largely depending on the ability of the carrier to absorb the chemical. Typical carrier material is a finely divided powder such as diatomaceous earth, in which category is included equivalent materials derived from diatomaceous earth, having a small particle size (e.g. surface area of 5 to 200 $m^2/g$, preferably 10 to 95 $m^2/g$). The pesticide may be a liquid or solid but is preferably liquid. The pesticide may be an acaricide (e.g., a sulfite acaricide), insecticide, fungicide, etc.

The pesticide-on-carrier particles are ordinarily dispersed in water using a mixture of dispersing and wetting agents such as sodium lignosulfonate and non-ionic surfactants for producing an aqueous dispersion of pesticide on the carrier. Other surfactants which can be used are polymerized salts of alkyl naphthalene sulfonic acid and the sodium sulfosuccinates. Latex is then added to the water-surfactant (pesticide-carrier) slurry with agitation sufficient to disperse the carrier and pesticide particles throughout the latex. If necessary, such latexes may be further stabilized by the addition of suitable stabilizers such as polyvinyl alcohol or hydroxyethyl cellulose. The latex particle size may typically vary from 0.1 to 25 $\mu$m (microns), preferably 0.5 to 8 $\mu$m (microns), in diameter.

Some thickening of the slurry occurs when the latex is combined with the pesticide-on-carrier water slurry. Usually, water is added to the slurry reducing the final solids to about 30%, which results in a slurry viscosity of from 25 to 250 m Pas (centipoise).

A dry powdery product is obtained by spray drying the latex-carrier pesticide suspension, for example at a temperature of from 120 to 220°C. The choice of spray drying equipment is not critical although spray dryers where the suspension is introduced from the top into the hot air stream are frequently more desirable.

When a mixture of relatively large and small particle size latexes is used, a more uniform polymer coating of the carrier/pesticide may be achieved.

Additional surfactants may be added to the particles for better wetting and dispersion when the product is used in a spray solution to be applied to a crop.

A typical process for making the product may be summarized as follows:

1. Mix carrier and liquid or solid pesticide at about room temperature for 100°C maximum.

2. Add carrier/pesticide particles to water containing dispersing and/or wetting agents while agitating.

3. Add latex [containing polyvinyl acetate polymer or other suitable polymer] to suspension achieved by step (2) with agitation.

4. Pass product of step (3) through spray dryer.

Optionally, a portion of the dispersing/wetting agents may be added to the product achieved by

2

step (1). Additional surfactant can be mixed with the product of step (4) to assure good dispersion of the product when used in a spray application.

Example 1

Preparation of encapsulated acaricide.

(A) 2-[4-(1,1-dimethylethyl)phenoxy]cyclohexyl 2-propynyl sulfite (a liquid, also known as propargite) at about 50°C is sprayed onto diatomaceous earth (surface area 95 m²/g) in a ribbon blender. Surfactants indicated in the recipe below are then added while agitating and the mixture is hammer milled. Eight separate preparations are prepared and combined. The following recipe (wherein parts are expressed by weight) is used:

| | |
|---|---|
| Propargite, 84.6% active | 286 parts |
| Diatomaceous earth | 240 parts |
| Highly purified sodium lignosulfonate | 2 parts |
| Octylphenoxy polyethoxy-ethanol absorbed on magnesium carbonate | 2 parts |
| Polymerized sodium salts of alkyl naphthalene sulfonic acid | 2 parts |

The product (A) contains 46.7% of active acaricide.

(B). The above mixture is further modified using the recipes below (wherein amounts are expressed in grams):

3

| Sample number: | 1 | 2 | 3 | 4 |
|---|---|---|---|---|
| Acaricide on diatomaceous earth (A) | 404.9 | 404.9 | 404.9 | |
| Highly purified sodium lignosulfonate | 9.0 | 3.5 | 4.5 | |
| Octyl phenoxy polyethoxy-ethanol absorbed on magnesium carbonate | 3.0 | 1.2 | 1.5 | |
| Polymerized sodium salts of alkyl naphthalene sulfonic acid | 3.0 | 1.2 | 1.5 | |
| Dioctyl ester of sodium sulfosuccinic acid | — | 1.2 | — | |
| Polyvinyl acetate latex (PVAC) 55% solids | 131.0 | 175.0 | 87.0 | |
| Water | 1100.0 | 1100.0 | 1100.0 | |
| PVAC, weight percent | 14.9 | 19.2 | 10.4 | |
| Acaricide | | | | 36.7 |
| Sodium N-methyl-N-palmitoyl taurate | | | | 1.5 |
| Propylene glycol | | | | 2.0 |
| Sodium alkyl naphthalenesulfonate | | | | 1.0 |
| Salts of lignosulfonic acid | | | | 4.0 |
| Diatomaceous earth (surface area 95 m$^2$/g) | | | | 7.1 |
| Diatomaceous earth (surface area 10—20 m$^2$/g) | | | | 13.0 |
| Attapulgus clay | | | | 34.7 |

Under agitation, the surfactants are added to the water until dissolved. The acaricide on diatomaceous earth is then added as rapidly as the slurry permits. The polymer latex is added with stirring. The slurry is spray-dried at 110 ml per minute at an input temperature of 120°C. After drying, sample 1 contains 37.7% active ingredient, sample 2 contains 35.0%, while sample 3 contains 39.3% acaricide. Sample 4, which is a control sample that is outside the invention, included for purposes of comparison only, is prepared by spraying the acaricide into a mixture of the fillers and then adding surfactants. Hammer milling is used to make the product uniform. The resulting product contains 31% active acaricide.

Acaricidal test

(C) The ability of these formulations to kill two-spotted spider mites is determined using the following procedure: Cowpea (Vigna sinensis Germaine's Blackeye #5) are planted, 3 seeds per pot. When grown to first trifoliate stage, each pot is thinned to the best two plants. These are sprayed with a JGA 502 DeVilbiss (trademark) spray gun for 20 seconds each pot. Spray solutions are made using addition of water to bring solutions to concentration indicated in Table I. 1, 8, 14 and 28 days after spraying, two-spotted spider mites are applied to each leaf inside a "Tanglefoot" (trademark) circle on the top of each leaf. The number of live mites remaining seven days after application is counted. The percent control is calculated using the following equation:

**0 018 119**

$$\% \text{ control} = 100 \times \frac{\left[\begin{array}{c}\text{number of live mites in untreated check} - \\ \text{number of live mites/sample}\end{array}\right]}{\text{Number of live mites in untreated check}}$$

The results are summarized in Table I.

**TABLE I**

| Composition | Rate ppm | % Control | | | |
|---|---|---|---|---|---|
| | | 1 day | 8 day | 14 day | 28 day |
| 1 | 500 | — | 96 | 87 | 86 |
| | 100 | 81 | 47 | 71 | 43 |
| | 20 | 18 | 40 | 26 | 20 |
| | 5 | 0 | — | — | — |
| 2 | 500 | — | 100 | 96 | 80 |
| | 100 | 83 | 77 | 59 | 50 |
| | 20 | 19 | 69 | 40 | 29 |
| | 5 | 0 | — | — | — |
| 3 | 500 | — | 100 | 100 | 100 |
| | 100 | 85 | 85 | 75 | 67 |
| | 20 | 60 | 70 | 56 | 49 |
| | 5 | 7 | — | — | — |
| 4 | 500 | — | 100 | 100 | 100 |
| | 100 | 100 | 89 | 98 | 56 |
| | 20 | 86 | 50 | 37 | 33 |
| | 5 | 60 | — | — | — |

The results in Table I show that samples 1, 2 and 3 are as effective in controlling two-spotted spider mites as the untreated control 4 over a 28 day period.

Herbicidal test

(D) The effect of these treatments on the phytotoxicity of acaricide to cowpeas is tested as in (C) except mites are not applied. Higher concentrations of acaricide are used to exaggerate possible phytotoxic effects. The samples are rated 7 days after spraying. The degree of damage produced is determined, and the results shown in Table II are obtained.

**0 018 119**

#### TABLE II

| Sample no. | % Damage primary leaves ppm: | | | Damage trifoliate leaves | | |
|---|---|---|---|---|---|---|
| | 8000 | 2000 | 500 | 8000 | 2000 | 500 |
| 1 | 15 | 5 | 1 | Mod. | trace | slight |
| 2 | 15 | 2 | 0 | Mod. | slight | trade |
| 3 | 10 | 3 | 0 | Mod. | slight | trace |
| 4 (Control) | 95 | 20 | 0 | Sev. | mod/sev. | slight |

The results in Table II show that the encapsulating material substantially reduces phytotoxic damage to leaves by the acaricide. 95% damages means essentially all of the green leaf surface has been destroyed.

(E) Potted Tioga strawberries are sprayed with a spray containing 0.4536 Kg per 4.047 m² (one pound active propargite per acre) in 121 litres (32 gallons) of water. 236 ml (One half pint) of adjuvant surfactant per 378 litres (100 gallons) of water is included in each treatment. Ten replicate pots are used for each treatment. Five days after treatment the plants are rated for phytotoxicity. On a 1 to 10 scale (1=least damage), the results shown in Table III are obtained:

#### TABLE III

| Sample No. | Mean phytotoxicity damage |
|---|---|
| 1 | 5.0 |
| 2 | 5.5 |
| 3 | 6.0 |
| 4 (Control) | 9.0 |

The data in Table III show considerable improvement in damage reduction to strawberries when the encapsulated samples 1, 2 and 3 are used compared with the non-encapsulated control 4.

Example 2
Preparation of encapsulated acaricide

Production scale equipment is used for sample preparation applying various amounts of encapsulating polymer. The acaricide-on-carrier is prepared by spraying hot (about 50°C) acaricide into diatomaceous earth in a Littleford-Lodigé (trademark) mixer. The following recipe is used:

(A)

| | |
|---|---|
| Propargite, 86.5% | 8.4 Kg (18.5 pounds) |
| Diatomaceous earth | 7.3 Kg (16.0 pounds) |
| Highly purified sodium lignosulfonate | 0.09 Kg (0.2 pounds) |
| Dioctyl ester of sodium sulfosuccinic acid | 0.09 Kg (0.2 pounds) |

After all of the propargite has been sprayed into the diatomaceous earth, the surfactants are added. An assay of 47 percent of acaricide is determined.

(B) In the same manner as in Example 1(B), a slurry is prepared containing the pesticide-on-carrier mixture. Encapsulation is carried out using polyvinyl acetate latex (55% solids) and sufficient water to provide the specified percentage of active acaricide, according to the following recipes:

6

| Sample | 5 | 6 | 7 | 8 | 9 |
|---|---|---|---|---|---|
| Propargite on DE (see A), pounds | 22.5 | 21.25 | 20.0 | 17.5 | 13.75 |
| Polyvinyl acetate-dry, pounds | 2.5 | 3.75 | 5.0 | 7.5 | 11.75 |
| Highly purified sodium lignosulfonate, grams | 35.0 | 95.0 | 78.0 | 125.0 | 104.00 |
| Dioctyl ester of sodium sulfosuccinic acid, grams | 9.0 | — | — | — | — |
| Octyl phenoxy polyethoxy ethanol absorbed on magnesium carbonate, grams | — | 32.0 | 23.0 | 40.0 | 34.0 |
| Polymerized sodium salts of alkyl naphthalene sulfonic acid, grams | — | 32.0 | 23.0 | 40.0 | 34.0 |
| Polymer wt.—% | 10.0 | 15.0 | 20.0 | 30.0 | 45.0 |
| Active acaricide wt.—% | 44.3 | 42.5 | 40.0 | 33.6 | 27.5 |

Acaricidal test

(C) Acaricidal tests are conducted using the procedure outlined in Example 1 (C) except for the one-day test. The control of the spider mites is calculated as before. Test results are shown in Table IV.

TABLE IV

| | % Control | | | | | |
|---|---|---|---|---|---|---|
| | 8 Day | | | 28 Day | | |
| Sample No. | 500 ppm | 100 ppm | 20 ppm | 500 ppm | 100 ppm | 20 ppm |
| 5 | 100 | 100 | 72 | 100 | 87 | 45 |
| 6 | 100 | 100 | 81 | 100 | 80 | 25 |
| 7 | 100 | 100 | 91 | 93 | 58 | 7 |
| 8 | 100 | 98 | 86 | 95 | 70 | 18 |
| 9 | 100 | 100 | 79 | 100 | 27 | 5 |
| 4 (Control) | 100 | 98 | 77 | 100 | 55 | 45 |

The results in Table IV clearly indicate that the encapsulated products are essentially as effective in killing spider mites as the untreated control material (Sample 4).

Herbicidal test

(D) The phytotoxic effects of these preparations to cowpeas is shown in Table V. The acaricide is applied as in Example 1 (D). The amount of damage by the acaricide is rated 7 days after application.

# 0 018 119

### TABLE V

| Sample | Primary leaves % damage | | | Trifoliates damage | | |
|---|---|---|---|---|---|---|
| | 8000 ppm | 2000 ppm | 500 ppm | 8000 ppm | 2000 ppm | 500 ppm |
| 5 | 60 | 15 | 3 | Sev. | Slight | Trace |
| 6 | 15 | 3 | 1 | Mod. sev. | Slight | 0 |
| 7 | 0 | 1 | 0 | Mod. | Trace | 0 |
| 8 | 5 | 0 | 0 | Mod. sl. | Trace | 0 |
| 9 | 0 | 0 | 0 | Trace | 0 | 0 |
| 4 (Control) | 95 | 45 | 15 | Sev. | Sev. mod. | Slight |

Considerable phytotoxicity to primary leaves (i.e. bronzing and almost complete destruction of the green leaf surface) is evident at 500 ppm to 8000 ppm of the untreated control 4. Damage to the trifoliates (which are just emerging when the sprays are applied) represent curling, twisting and stunting of the leaf growth. These results show that as the polymer weight percentage is increased the phytotoxic effect of the pesticide is considerably reduced.

Example 3

The samples prepared in Example 2 are evaluated on 3-year old Bartlett pear trees.

The entire leaf surface is treated, and each solution is applied to runoff at the two application rates used. Phytotoxicity readings are taken 14 days after spraying, with the results shown in Table VI.

### TABLE VI
Phytotoxicity
application rate-ppm

| Sample No. | 300 | 600 |
|---|---|---|
| 5 | Trace-Sl. | Trace-Sl. |
| 6 | Trace | Trace |
| 7 | 0 | Trace |
| 8 | 0 | 0 |
| 9 | 0 | Trace |
| 4 (Control) | Moderate-slight defoliation | Moderate-Severe Moderate defoliation |

Bartlett pears are very sensitive to this acaricide. Defoliation may occur even at a low rate normally used to control spider mites. Reduction in phytotoxicity is found even at the lowest polymer weight percentage. Samples 7, 8 and 9 having higher polymer weight percentage exhibit essentially no damage, whereas non-treated controls 4 cause moderate to severe damage.

Example 4

This example demonstrates the effects of using a blend of large and small particle size polyvinyl acetate latexes.

(A) Preparation of encapsulated acaricide

The acaricide on diatomaceous earth (DE) used in Example 2(A) is used. The slurry preparation technique is the same as in 2 (B). The following preparations are made:

8

| Sample | 10 | 11 | 12 | 13 | 14 | 15 |
|---|---|---|---|---|---|---|
| Propargite on DE, lbs. | 21.25 | 19.0 | 22.5 | 12.7 | 17.5 | 25.2 |
| Polyvinyl acetate Latex A, lbs. | 3.75 | 1.705 | 2.5 | 1.3 | 7.5 | 9.8 |
| Polyvinyl acetate Latex B, lbs. | — | 1.705 | — | 1.3 | — | 9.8 |
| Highly purified sodium lignosulfonate, g | 23.0 | 150.0 | 35.0 | 65.0 | 125.0 | 160.0 |
| Octyl phenoxy polyethoxy ethanol absorbed on mg carbonate, g | — | 50.0 | — | 23.00 | 40.0 | 53.0 |
| Polymerized sodium salts of alkyl naphthalene sulfonic acids, g | — | 50.0 | — | 23.0 | 40.0 | 53.0 |
| Dioctyl ester of sodium sulfosuccinic acid, g | 6.0 | — | 9.0 | — | — | — |
| Acaricide, % weight | 41.6 | 38.5 | 44.3 | 33.5 | 41.6 | 34.3 |

Polyvinyl acetate latex A (55% solids) has a particle size of 2—8 microns and latex B (55% solids) has a particle size of 0.5—1.5 microns.

(B) Phytotoxicity to cantelopes is demonstrated using the method of Example 1 (D). The results obtained at a rate of 0.4536 Kg per 4047 m² of active acaricide (1 pound per acre) are shown in Table VII.

TABLE VII

| Sample latex | Phytotoxicity to cantelopes mean damage |
|---|---|
| 10 A | 4.13 |
| 11 A & B | 3.93 |
| 12 A | 5.20 |
| 13 A & B | 5.00 |
| 14 A | 2.73 |
| 15 A & B | 1.47 |
| 4 (Control) | 8.60 |

The results in Table VII show reduced phytotoxicity resulting when a mixture of large and small particle size latexes are used rather than a single particle size latex.

**Claims**

1. A method for encapsulating a pesticide characterised in that the method comprises the following steps:

(a) absorbing said pesticide on a solid particulate carrier;
(b) dispersing the product of step (a) in water;
(c) adding a latex to the dispersion of step (b); and
(d) spray drying the suspension obtained from step (c).

**0 018 119**

2. A method according to claim 1 characterised in that the said pesticide is a liquid pesticide.

3. A method according to claim 1 or claim 2 characterised in that said carrier is diatomaceous earth and said latex is polyvinyl acetate latex.

4. A method according to any of the preceding claims characterised in that the dispersion obtained by step (b) contains dispersing and/or wetting agent.

5. A method according to any of the preceding claims characterised in that step (c) is carried out while agitating the dispersion.

6. A method according to any of the preceding claims characterised in that said pesticide is an acaricide.

7. A method according to claim 6 characterised in that said acaricide is a sulfite acaricide.

8. A method according to claim 7 characterised in that said sulfite is 2-[4-(1,1-dimethylethyl)phenoxy]cyclohexyl 2-propynyl sulfite.

9. An encapsulated pesticidal composition characterised in that it comprises a solid carrier having absorbed thereon a liquid pesticide, the pesticide-on-carrier material being covered by a solid polymer in an amount of at least 10% by weight.

10. A composition according to claim 9 characterised in that said polymer is polyvinyl acetate.

11. A composition according to claim 9 or claim 10 characterised in that said carrier is diatomaceous earth.

## Patentansprüche

1. Verfahren zur Verkapselung eines Pestizids, dadurch gekennzeichnet, daß das Verfahren die folgenden Schritte umfaßt:

(a) Aufsaugen des Pestizids auf einen festen, teilchenförmigen Träger,
(b) Dispergieren des Produkts von Schritt (a) in Wasser,
(c) Zugeben eines Latex zu der Dispersion von Schritt (b) und
(d) Sprühtrocknen der aus Schritt (c) erhaltenen Suspension.

2. Verfahren nach Anspruch 1, dadurch gekennzeichnet, daß das Pestizid ein flüssiges Pestizid ist.

3. Verfahren nach Anspruch 1 oder 2, dadurch gekennzeichnet, daß der Träger Kieselgur ist und daß der Latex Polyvinylacetatlatex ist.

4. Verfahren nach einem der vorhergehenden Ansprüche, dadurch gekennzeichnet, daß die durch Schritt (b) erhaltene Dispersion ein Dispergier- und/oder Benetzungsmittel enthält.

5. Verfahren nach einem der vorhergehenden Ansprüche, dadurch gekennzeichnet, daß Schritt (c) durchgeführt wird, während die Dispersion gerührt wird.

6. Verfahren nach einem der vorhergehenden Ansprüche, dadurch gekennzeichnet, daß das Pestizid ein Akarizid ist.

7. Verfahren nach Anspruch 6, dadurch gekennzeichnet, daß das Akarizid ein Sulfit-Akarizid ist.

8. Verfahren nach Anspruch 7, dadurch gekennzeichnet, daß das Sulfit 2-[4-(1,1-Dimethylethyl)-phenoxy]-cyclohexyl-2-propinylsulfit ist.

9. Verkapselte Pestizidmischung, dadurch gekennzeichnet, daß sie einen festen Träger enthält, auf den ein flüssiges Pestizid aufgesaugt ist, wobei das aus Pestizid auf Träger bestehende Material von einem festen Polymer in einer Menge von mindestens 10 Gewichtsprozent umhüllt ist.

10. Mischung nach Anspruch 9, dadurch gekennzeichnet, daß das Polymer Polyvinylacetat ist.

11. Mischung nach Anspruch 9 oder 10, dadurch gekennzeichnet, daß der Träger Kieselgur ist.

## Revendications

1. Méthode pour encapsuler un pesticide, caractérisée en ce que la méthode comprend les étapes qui suivent:

(a) absorber ledit pesticide sur un support particulaire solide;
(b) disperser le produit de l'étape (a) dans l'eau;
(c) ajouter un latex à la dispersion de l'étape (b); et
(d) sécher par pulvérisation la suspension obtenue à l'étape (c).

2. Méthode selon la revendication 1, caractérisée en ce que ledit pesticide est un pesticide liquide.

3. Méthode selon la revendication 1 ou la revendication 2, caractérisée en ce que ledit support est de la diatomite et ledit latex est un latex d'acétate de polyvinyle.

4. Méthode selon l'une quelconque des revendications précédentes, caractérisée en ce que la dispersion obtenue à l'étape (b) contient un agent dispersant et/ou mouillant.

5. Méthode selon l'une quelconque des revendications précédentes, caractérisée en ce que l'étape (c) est mise en oeuvre tout en agitant la dispersion.

10

6. Méthode selon l'une quelconque des revendications précédentes, caractérisée en ce que ledit pesticide est un acaricide.

7. Méthode selon la revendication 6, caractérisé en ce que ledit acaricide est un sulfite acaricide.

8. Méthode selon la revendication 7, caractérisé en ce que ledit sulfite est du sulfite de 2-[4-(1,1-diméthyléthyl)phénoxy]cyclohexyl-2-propynyle.

9. Composition pesticide encapsulée caractérisée en ce qu'elle comprend un support solide où est absorbé un pesticide liquide, le matériau pesticide-sur-support étant couvert d'un polymère solide en une quantité d'au moins 10% en poids.

10. Composition selon la revendication 9, caractérisée en ce que ledit polymère est de l'acétate de polyvinyle.

11. Composition selon la revendication 9 ou la revendication 10, caractérisée en ce que ledit support est de la diatomite.